# EUROPÄISCHE PATENTSCHRIFT

(11) **EP 3 050 427 B1**
(45) Veröffentlichungstag und Bekanntmachung des Hinweises auf die Patenterteilung: **16.09.2020**
(21) Anmeldenummer: 15003535.0
(22) Anmeldetag: 11.12.2015
(51) Int. Cl.: A01G 9/02

(54) **PFLANZBEHÄLTER**
PLANT CONTAINER
JARDINIÈRE

(30) Priorität: 29.01.2015 AT 372015
(43) Veröffentlichungstag der Anmeldung: 03.08.2016
(73) Patentinhaber: Hangartner, Arnold, 6020 Innsbruck (AT)
(72) Erfinder: Hangartner, Arnold, 6020 Innsbruck (AT)
(74) Vertreter: Torggler & Hofinger Patentanwälte

(56) Entgegenhaltungen:
- EP-A2- 0 098 474
- EP-A2- 0 623 276
- DE-U1- 29 716 900
- FR-A1- 2 995 503
- GB-A- 2 482 654
- US-A- 5 265 376
- US-A- 5 555 676

## Beschreibung

Die vorliegende Erfindung betrifft einen Pflanzbehälter gemäß den Merkmalen des Oberbegriffs des Anspruchs 1.

Die US 2005/0166452 A1 zeigt einen Pflanzbehälter mit einem zylindrischen Hohlkörper, in welchen Pflanzsubstrat, beispielsweise Erde, gefüllt ist. Die Pflanzen werden in Öffnungen des Zylindermantels horizontal eingepflanzt.

Die DE 3223644 A1 zeigt ebenfalls einen Pflanzbehälter mit zylindrischem Hohlkörper zur Aufnahme von Pflanzsubstrat. Die Öffnungen in dem Zylindermantel weisen hier einen Stützrand auf, um das Auswaschen von Erde durch die Öffnungen hinaus zu verhindern. Beim Gießen des Pflanzsubstrats von oben sickert Wasser nach unten. Da das Gießen häufig schwallartig erledigt wird, kann der Unterstützungsrand das Auswaschen jedoch nicht verhindern. Nicht einmal ohne Einwirkung von Wasser kann auch bei beispielsweise trockener Erde ein Austreten durch den Unterstützungsrand verhindert werden.

Die US 5555676 A, die FR 2995503 A1 und die EP 062327 A2 offenbaren vertikale Pflanzbehälter, die jeweils auf einem Wasserreservoir angeordnet sind.

Die FR 2995503 A1 und die EP 0098474 A2 offenbaren gebogene Rohrelemente zum Bepflanzen, wobei nicht offenbart wird, wie diese zu befestigen oder herzustellen wären.

Die US 5265376 A offenbart einen Pflanzbehälter mit einklipsbaren geraden Rohrelementen.

Die DE 29716900 U1 offenbart Rohrformstücke, welche in einen aufgeschnittenen Plastiksack als Pflanzbehälter eingeführt werden.

Die GB 2482654 A offenbart ein Pflanzsystem, wobei zwei Behälter durch eine Stecker-Dose-Verbindung miteinander verbunden werden. Auch hier ist ein Reservoir in Form eines Schwamms unterhalb der Behälter angeordnet.

Aufgabe der vorliegenden Erfindung ist es, ausgehend von der EP 0 098 474 A2, einen Pflanzbehälter bereitzustellen, bei welchem das Auswaschen das Pflanzsubstrates aus dem Hohlkörper beispielsweise durch Gießen soweit als möglich verhindert ist.

Dies wird durch einen Pflanzbehälter gemäß den Merkmalen des Anspruchs 1 erreicht.

Gemäß Anspruch 1 wird das Problem dadurch gelöst, dass Rohrelemente an den Öffnungen angeordnet werden, welche eine Biegung und/oder einen Knick aufweisen. Die Pflanzen können dann am Ende des Rohrelements gepflanzt werden, wobei am Ende des Rohrelements keine nachteilige beispielsweise vertikale Ausrichtung der Pflanzöffnung vorliegt, wie dies im Stand der Technik der Fall ist.

Die zusätzlichen positiven Effekte, dass die Pflanze in der gewohnten Ausrichtung gepflanzt werden kann, beispielsweise in einer horizontalen Pflanzöffnung, und dass das Einsetzen des Rohrelements vereinfacht ist, da die Biegung und/oder der Knick gleichzeitig (kurbelartig) als Handgriff dienen kann. Ein weiterer Vorteil erfindungsgemäßer Rohrelemente besteht darin, dass sie auch unabhängig vom Hohlkörper verwendet werden können. Beispielsweise wäre es möglich Pflanzen von Pflanzenlieferanten bereits im Rohrelement ausliefern zu lassen, wodurch den Pflanzen der Umsetzungsstress erspart bleibt. Dies ist außerdem nachhaltiger, da keine überflüssigen Gefäße für den Transport bereitgestellt werden müssen. Auch danach können die Rohrelemente weiter verwendet werden, beispielsweise indem darin vom Endverbraucher Samen angesetzt werden können - auch dies unabhängig vom Hohlkörper. Nach erfolgter Keimung kann das Rohrelement dann in den Hohlkörper eingesetzt werden. Dies ermöglicht eine Erhöhung der Produktivität, da die angesetzten Samen keinen Platz am Hohlkörper verbrauchen.

Erfindungsgemäß ist außerdem vorgesehen, dass die Rohrelemente am Hohlkörper mittels eines Bajonettverschlusses lösbar befestigbar sind und dass die Rohrelemente mehrteilig aus Kunststoff durch Spritzguss hergestellt sind. Der Einsatz von Bajonettverschlüssen erlaubt durch seine flächige Ausprägung außerdem eine relativ geringe Wandstärke des Hohlkörpers. Ein zusätzlicher Vorteil eines Bajonettverschlusses besteht in der stark verbesserten Verbindung (Beispiel: Windeinfluss) im Vergleich zu einer einfachen Steckverbindung.

Die Mehrteiligkeit bietet den weiteren Vorteil, dass die Rohrelemente leichter gereinigt und in weiterer Folge wieder verwendet werden können. Zusätzlich kann die Bepflanzung der Rohrelemente erleichtert werden, weil die Pflanzen nicht in die Rohrelemente gestopft werden müssen.

Gemäß des abhängigen Anspruchs 12 ist weiter vorgesehen, dass im Hohlkörper ein Senkrohr zur Bereitstellung von Feuchtigkeit angeordnet ist. Das Senkrohr ist dadurch besonders ausgebildet, dass an einem oberen Ende des Senkrohrs ein Verbindungsstück angeordnet ist, mittels dessen ein Behälter für Flüssigkeit, insbesondere Wasser, an das Senkrohr anschließbar ist, dass das Senkrohr an einem unteren Ende verschlossen ist und dass das Senkrohr eine Vielzahl von Öffnungen aufweist, deren Durchmesser jeweils weniger als 1,5 mm, bevorzugt weniger als 1 mm und besonders bevorzugt weniger als 0,75 mm, beträgt, und/oder dass das Senkrohr aus einem porösen Material gefertigt ist.

Dies ermöglicht das Gießen sowohl durch eine konstruktiv einfache Vorrichtung und dennoch automatisch - ohne dass die Gießflüssigkeit, insbesondere Wasser, schwallartig in das Pflanzsubstrat eintritt und dadurch das Auswaschen das Pflanzsubstrats verursacht. Dies wird dadurch ermöglicht, dass die Öffnungen einen so geringen Durchmesser haben, dass der Druck der darüber stehenden Wassersäule in etwa im Gleichgewicht mit der zurückhaltenden Kraft der Oberflächenspannung der Flüssigkeit (bzw. kann erstere leicht größer als zweitere sein). Es ergibt sich eine optimale Flüssigkeitsmenge, wobei sichergestellt ist, dass weder Wasser noch Nährstoffe aus dem Pflanzsubstrat ausgeschwemmt werden, und gleichzeitig die nutzbare Feldkapazität sehr nahe am Optimum genutzt wird. (Die "nutzbare Feldkapazität" bezeichnet das maximale Speichervermögen eines Pflanzsubstrats für pflanzenverfügbares Wasser.)

Weitere vorteilhafte Ausführungen der Erfindung sind in den abhängigen Ansprüchen definiert.

Für gewöhnliche Pflanzen ist es von Vorteil, wenn sie im Wesentlichen in der Horizontalen gepflanzt werden können, da dies ihrer natürlichen Umgebung entspricht. Dies kann erreicht werden, indem das vom Hohlkörper wegweisende Ende der Rohrelemente im Wesentlichen nach oben weist, bzw. indem eine vom Hohlkörper wegweisende Pflanzöffnung der Rohrelemente im Wesentlichen waagrecht ist.

Die Biegung und/oder der Knick können einen Winkel von mehr als 30°, bevorzugt mehr als 45° und besonders bevorzugt mehr als 60° einschließen, wobei in einer ganz besonders bevorzugten Ausführungsform ein im Wesentlichen rechter Winkel eingeschlossen wird. Dies ermöglicht einen relativ hohen Pflanzbehälter bei relativ geringer Grundfläche, welcher trotzdem eine normale Pflanzumgebung für die Pflanzen bieten kann. Dadurch wird so wenig wie möglich Platz für die Grundfläche des Pflanzbehälters verwendet. In städtischen Umgebungen ist dies wertvoll, da bei hoher Bevölkerungsdichte Grundfläche sehr wertvoll ist, wodurch eine hochbauende Konstruktion von Vorteil ist.

Außerdem wird durch das Einschließen eines solchen Winkels das Auswaschen des Pflanzsubstrats besser verhindert (je größer der Winkel, desto besser).

Als Pflanzsubstrat kann bevorzugt Erde, insbesondere Blumenerde, zum Einsatz kommen.

Zum Gießen kann bevorzugt Wasser, gegebenenfalls versetzt mit einem Dünger, zum Einsatz kommen.

In einer besonders bevorzugten Ausführungsform kann es vorgesehen sein, dass die Rohrelemente jeweils ein in den Hohlkörper hinein ragenden - vorzugsweise schräg abgeschnittenen - Rohrstumpf aufweisen. Dies ermöglicht die Stabilisierung des Pflanzsubstrats im Hohlkörper und hilft bei der Förderung von Bewässerungsflüssigkeit zur Pflanze hin. Durch das schräge Abschneiden des Rohrstumpfes ist das Rohrelement nicht mehr symmetrisch bezüglich seiner Mittellinie.

Besonders bevorzugt kann es außerdem vorgesehen sein, dass der Hohlkörper einen fertigen Sack mit Pflanzsubstrat aufnimmt, wozu der Sack speziell geformt sein kann. In diesem Fall kann es vorgesehen sein, dass am Rohrstumpf eine Schneide zum Durchstechen des das Pflanzsubstrat enthaltenden Sacks vorgesehen ist. Dies ermöglicht eine besonders einfache und saubere Bereitstellung der erfindungsgemäßen Vorrichtung. Es muss lediglich der Sack bereitgestellt werden, der Hohlkörper drüber gestülpt werden und der Sack mittels der Rohrstümpfe aufgeschnitten werden. Der Sack kann außerdem das Austreten von Flüssigkeit am Boden verhindern.

Um zu verhindern, dass sich in den Rohrelementen Flüssigkeit sammelt, kann es vorgesehen sein, dass an einer Unterseite des Rohrstumpfes eine Abflussöffnung zur Abfuhr überschüssiger Flüssigkeit angeordnet ist.

Für ein bequemes Bepflanzen der Pflanzöffnung am Rohrelement kann eine Verbreiterung desselben vorgesehen sein, wodurch mehr Platz zur Verfügung gestellt wird. Außerdem erlaubt eine derartige Verbreiterung insbesondere Jungpflanzen unabhängig von einer zentralen Bewässerung zusätzlich bewässert und gedüngt werden, das heißt die Verbreiterung kann als Reservoir dienen.

In die Rohrelementen kann je nach Erfordernis anderes Pflanzsubstrat (zum Beispiel Anzuchterde für Jungpflanzen oder pflanzenspezifisches Pflanzsubstrat) gefüllt werden als in den Hohlkörper. Natürlich ist es auch möglich das gleiche Pflanzsubstrat einzufüllen.

Um den Transport von Feuchtigkeit und Nährstoffen in den Rohrelementen hin zur Pflanze zu unterstützen, kann es vorgesehen sein, dass dass in den Rohrelementen jeweils ein Vlies zum Transport von Feuchtigkeit zum vom Hohlkörper weg weisenden Ende der Rohrelemente vorhanden ist.

Es kann ebenfalls vorgesehen sein, dass an einer unteren Innenwandung der Rohrelemente Lamellen angeordnet sind.

Wegen der einfachen Herstellbarkeit und der mechanischen, sowie chemischen Eigenschaften können nicht nur die Rohrelemente sondern auch der Hohlkörper bevorzugt aus Kunststoff gefertigt sein.

Besonders bevorzugt vorgesehen kann es dabei sein, dass die Rohrelemente ein Filmscharnier und/oder eine schwalbenschwanzartige Verbindung aufweisen. Die Verwendung von Filmscharnieren kann bei der Herstellung der Rohrelemente besonders bevorzugt vorgesehen sein, da dies ein relativ einfaches Design der Formhälften ermöglicht.

Besonders bevorzugt kann das mehrteilige Rohrelement eine Verbreiterung aufweisen. Denn dann kann auch die Verbreiterung selbst als Pflanzträger verwendet werden und erst, wenn eine Jungpflanze darin angezogen wurde, kann dann die Verbreiterung auf das entsprechende Rohrelement aufgesetzt werden.

Bei einer Ausführung mit einem Senkrohr kann es bevorzugt vorgesehen sein, dass dieses von einem Vlies umgeben ist. Dieses zieht dann aus den kleinen Öffnungen Feuchtigkeit, wodurch die Bewässerung besonders kontrolliert und kontinuierlich geschieht.

Um den Transport der Flüssigkeit vom Senkrohr zu den Pflanzöffnungen weiter zu unterstützen, kann zumindest ein ringförmiges Vlies - vorzugsweise waagrecht ausgerichtet - das Senkrohr umgeben.

Es kann außerdem vorgesehen sein, dass der Hohlkörper auf einem Unterbau angeordnet ist, der vorzugsweise eine Schublade oder einen verschließbaren Hohlraum für Abfall (z.B. Pflanzabfall) und/oder Kompost umfasst. Dadurch wird es möglich, dass auf kleinem Raum alle für die Pflege der Pflanzen nötigen Vorrichtungen bereitgestellt sind. Insbesondere kann das in der Schublade oder dem verschließbaren Hohlraum kompostierte Material sofort wieder dem Pflanzsubstrat im Hohlkörper zugeführt werden. Die entstehende aufsteigende Kompostierwärme kann durch die Wurzelerwärmung das Pflanzenwachstum verstärken (Hochbeet-Prinzip).

In dem Falle, dass das Senkrohr aus einem posösen Material gefertigt ist, kann es vorgesehen sein, dass das poröse Material Porendurchmesser zwischen 0,5 µm und 10 µm, bevorzugt zwischen 1 µm und 5 µm und besonders bevorzugt zwischen 1 µm und 3 µm, aufweist.

Als poröses Material kann insbesondere Keramik oder Kunststoff zum Einsatz kommen.

Es kann vorgesehen sein, dass das Senkrohr eine schraubenförmige Formgebung aufweist, was die kontaktierende Oberfläche zum Pflanzsubstrat vergrößert und damit die Bewässerung verbessert. Des Weiteren ist das Einbringen des Senkrohrs in das Pflanzsubstrat erleichtert, da das Senkrohr eingedreht werden kann.

Schutz wird ebenfalls, nach Anspruch 14, für die Verwendung eines Rohrelementes, welches eine Biegung und/oder einen Knick aufweist zur Aufnahme eines Pflanzsubstrats, insbesondere Erde, in einem erfindungsgemäßen Pflanzbehälter nach einem der Ansprüche 1 - 13 begehrt. Dabei kann es insbesondere vorgesehen sein, dass das Pflanzsubstrat im Rohrelement bepflanzt wird.

Bei dieser Verwendung des Rohrelementes kann es vorteilhaft sein, dass ein erster Schenkel des Rohrelementes im Wesentlichen horizontal und/oder ein zweiter Schenkel des Rohrelementes im Wesentlichen vertikal ausgerichtet ist, da dies eine horizontale freie Erdoberfläche (Pflanzöffnung) bieten kann.

Weitere Vorteile und Einzelheiten der Erfindung sind aus den Figuren, sowie der dazugehörigen Figurenbeschreibung ersichtlich. Dabei zeigen:
- Fig. 1a bis 1c: verschiedene Schnittdarstellungen durch einen erfindungsgemäßen Pflanzbehälter,
- Fig. 2: eine explodierte Darstellung des erfindungsgemäßen Pflanzbehälters,
- Fig. 3: eine Schnittdarstellung eines erfindungsgemäßen Pflanzbehälters,
- Fig. 4a bis 4c: verschiedene Darstellungen eines schraubenförmig geformten Senkrohrs zur Flüssigkeitszufuhr,
- Fig. 5a bis 5d: verschiedene Darstellungen eines erfindungsgemäßen Rohrelements,
- Fig. 6a bis 6e: weitere Darstellungen des erfindungsgemäßen
- Rohrelements,: insbesondere zur Verdeutlichung einer vereinfachten Herstellung,
- Fig. 7a bis 7c: verschiedene Darstellungen des erfindungsgemäßen Hohlkörpers,
- Fig. 8a und 8b: ebenfalls den Hohlkörper, insbesondere auch während der Herstellung,
- Fig. 9a bis 9c: einen erfindungsgemäßen, speziell geformten Sack,
- welcher an: die Form des Hohlkörpers angepasst ist,
- Fig. 10a bis 10c: einen speziell geformten Unterbau für einen erfindungsgemäßen Pflanzbehälter,
- Fig. 11a bis 11c: weitere Darstellungen eines speziell geformten Unterbaus,
- Fig. 12a bis 12c: weitere Darstellungen eines speziell geformten Unterbaus zusammen mit einem erfindungsgemäßen Pflanzbehälter,
- Fig. 13a bis 13d und Fig. 14a bis 14d: Darstellungen einer weiteren Ausführungsform eines erfindungsgemäßen Pflanzbehälters,
- Fig. 15a bis 15f: Darstellungen einer weiteren Ausführungsform eines erfindungsgemäßen Pflanzbehälters,
- Fig. 16a bis 16d: Explosionsdarstellungen der Ausführungsform aus den Figuren 15a bis 15f sowie
- Fig. 17a und 17b: Darstellungen eines erfindungsgemäßen Rohrelementes.

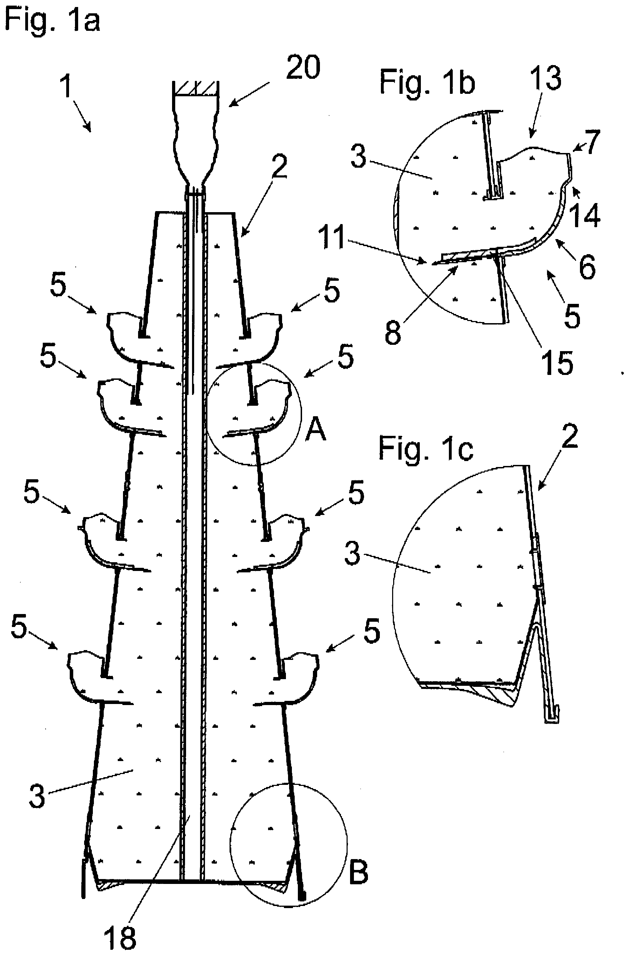

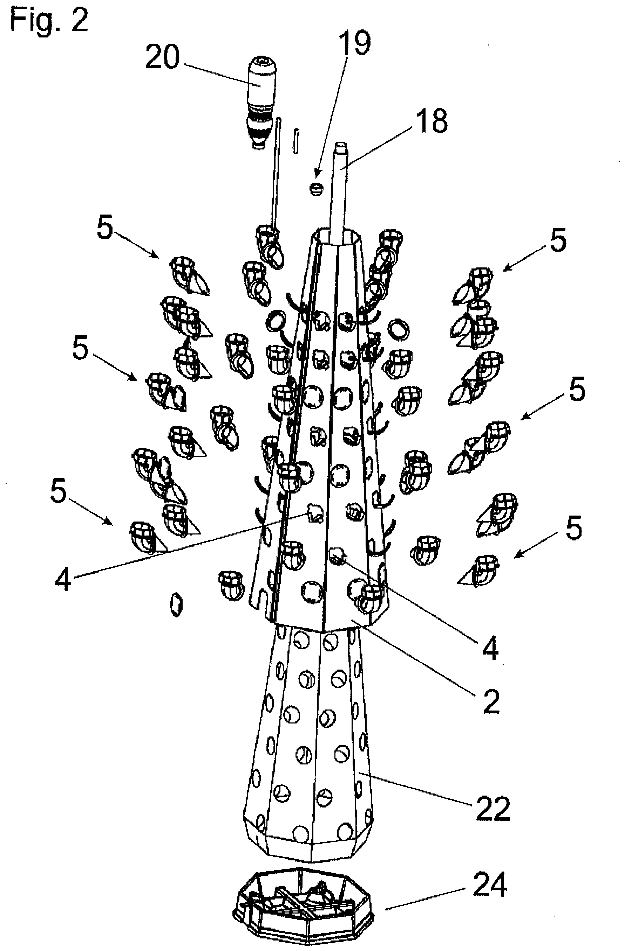

Fig. 1a zeigt einen erfindungsgemäßen Pflanzbehälter mit einem Hohlkörper 2 und mehreren Rohrelementen 5, welche an Öffnungen 4 des Hohlkörpers 2 angeordnet sind (die Öffnungen 4 sind in den Fig. 2, 5a, 5b sowie 6a und 6b zu erkennen).

Das Bewässerungssystem des Pflanzbehälters weist ein unten verschlossenes Senkrohr 18 sowie einen, am oberen Ende des Senkrohr 18 befestigten Behälter 20 für Flüssigkeit, insbesondere Wasser, gegebenenfalls versetzt mit Dünger, auf.

Der Behälter ist so montiert, dass die Flüssigkeit durch ihr Eigengewicht in das Senkrohr (nach)fließt. Dadurch ist keine externe Druckquelle nötig.

Das Senkrohr 18 weist eine Vielzahl von Löchern mit einem Durchmesser von weniger als 1 mm auf. Die Löcher sind nicht dargestellt, da sie zu klein sind. Durch ein um das Senkrohr 18 gewickeltes Vlies (ebenfalls nicht dargestellt) wird Feuchtigkeit aus dem Senkrohr 18 über die kleinen Löcher abgezogen.

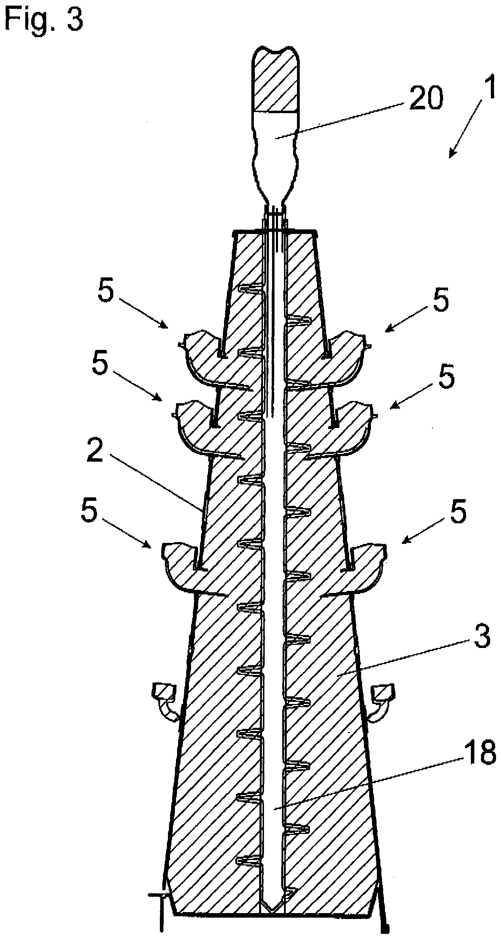

Das Vlies benetzt dadurch das im Hohlkörper 2 befindliche Substrat (in diesem Fall Erde) in einer kontrollierten und kontinuierlichen Art und Weise. Durch das Substrat 3 gelang die Feuchtigkeit zu den Rohrelementen 5, welche im Detail A der Fig. 1b näher dargestellt sind (die Rohrelemente 5 sind auch in den Fig. 3a bis 3d näher dargestellt).

Zu erkennen ist der Rohrstumpf 8 des Rohrelementes 5, welcher in den Hohlkörper 2 des Pflanzbehälters 1 hineinragt. An der Außenseite weist das Rohrelement 5 eine Biegung 6 auf, welche in diesem Fall etwa 90° einschließt. Dadurch ist die Pflanzöffnung 13 des Rohrelementes 5 im Wesentlichen waagrecht. An diesem Ende besitzt das Rohrelement 5 außerdem eine Verbreiterung 14, sodass etwas mehr Platz zur Bepflanzung vorhanden ist. Die Pflanzöffnung 13 ist im Wesentlichen waagrecht, was vorteilhaft für die Bepflanzung ist. An diesem Ende weist das Rohrelement 5 außerdem eine Verbreiterung 14 auf, um das Bepflanzen zu vereinfachen.

Am Boden des Rohrelementes 5 ist ein Vlies 15 angeordnet, welches den Transport von Feuchtigkeit aus dem Inneren des Hohlkörpers 2 zur Bepflanzung im Rohrelement 5 unterstützt.

Des Weiteren ist am Rohrstumpf 8 eine Schneide 11 angeordnet, deren Sinn im Folgenden beschreiben wird.

Wie im Detail B aus Fig. 1c, sowie in Fig. 2 zu erkennen ist, befindet sich zwischen dem Pflanzsubstrat 3 und dem Hohlkörper 2 eine Zwischenlage. Dies ist ein Sack 22, welcher speziell geformt ist, um genau in den Hohlkörper 2 hineinzupassen.

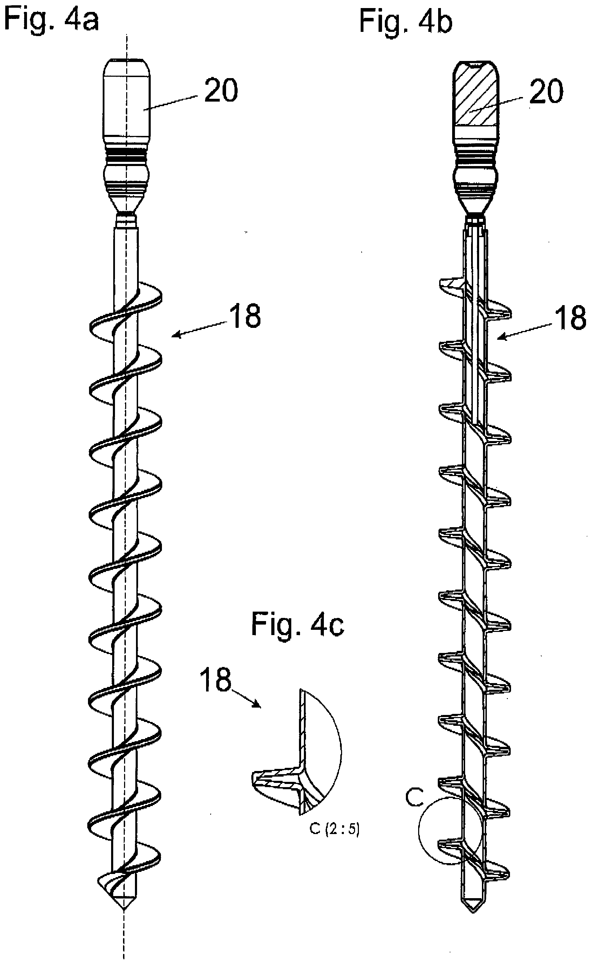

Dies ermöglicht eine sehr leichte Bereitstellung des Pflanzsubstrats 3 im Hohlkörper 2. Wie in Fig. 2 zu erkennen ist, muss der mit Substrat 3 gefüllte Sack 22 nur auf den Standfuß 24 gestellt werden und da der Hohlkörper 2 darübergestülpt werden. In weiterer Folge kann die Schneide 11 an den einzelnen Rohrelementen 5 dazu verwendet werden, durch die Öffnungen 4 im Hohlkörper 2 den Sack 22 zu durchstechen, wodurch ein pflanzbereiter Pflanzbehälter 1 auf einfache und saubere Weise bereitgestellt werden kann (in der Explosionsdarstellung der Fig. 4 sind bereits korrespondierende Öffnungen im Sack 22. Natürlich wird der Sack 22 ohne solche Öffnungen ausgeliefert).

Die Explosionsdarstellung der Fig. 2 zeigt eine Vielzahl von Rohrelementen 5, wobei nicht alle Rohrelemente 5 und alle Öffnungen 4 mit Bezugszeichen versehen sind, um die Übersichtlichkeit nicht zu beeinträchtigen.

Weiterhin ist in Fig. 2 das Senkrohr 18, der Behälter 20 sowie das Verbindungsstück 19 gezeigt. Weiters sind in Fig. 1a und Fig. 2 zwei kleine Röhrchen bzw. Schläuche unterschiedlicher Länge erkennbar, welche vom Verbindungsstück aus in das Senkrohr 18 hineinragen. Dies dient der Rückführung von Luft in den Behälter 20, wenn der Flüssigkeitsstand zwischen den Enden der Röhrchen Senkrohr 18 steht, sodass die Flüssigkeit dann unbeeinträchtigt aus dem Behälter 20 in das Senkrohr 18 fließen kann. Hierfür kann es notwendig sein, dass der Behälter 20 (beispielsweise Glas- oder PET-Flaschen) eine gewisse Festigkeit aufweist. Ist dies nicht der Fall, kann es vorkommen, dass der Behälter 20 kollabiert und die gesamte Flüssigkeit ungehindert ins Senkrohr 18 drückt.

Durch die Veränderung der Länge der Röhrchen kann die Intensität der Bewässerung insbesondere im oberen Teil des Senkrohrs eingestellt werden, indem der Flüssigkeitsstand im Senkrohr 18 beeinflusst wird.

Der Behälter 20 kann ein Volumen zwischen 0,5 l und 1,5 l und insbesondere etwa 1 l aufweisen.

Es ist nicht notwendig, dass alle Öffnungen 4 des Hohlkörpers 2 mit Rohrelementen 5 versehen werden. Zu diesem Zweck sind Deckel vorgesehen, die in die Öffnungen 4 gesetzt werden können, um diese zu Verschließen.

Die Deckel können ebenfalls eine Schneide 11 zum Anschneiden eines das Pflanzsubstrat 3 enthaltenden Sacks 22 aufweisen. Die Deckel können außerdem einen Vorsatz aufweisen, mittels welchem der Sack 22 auf Abstand zur entsprechenden Öffnung 4 gehalten wird. Dadurch kann das Austreten von Pflanzsubstrat beim Anschneiden des Substratsacks vermieden werden.

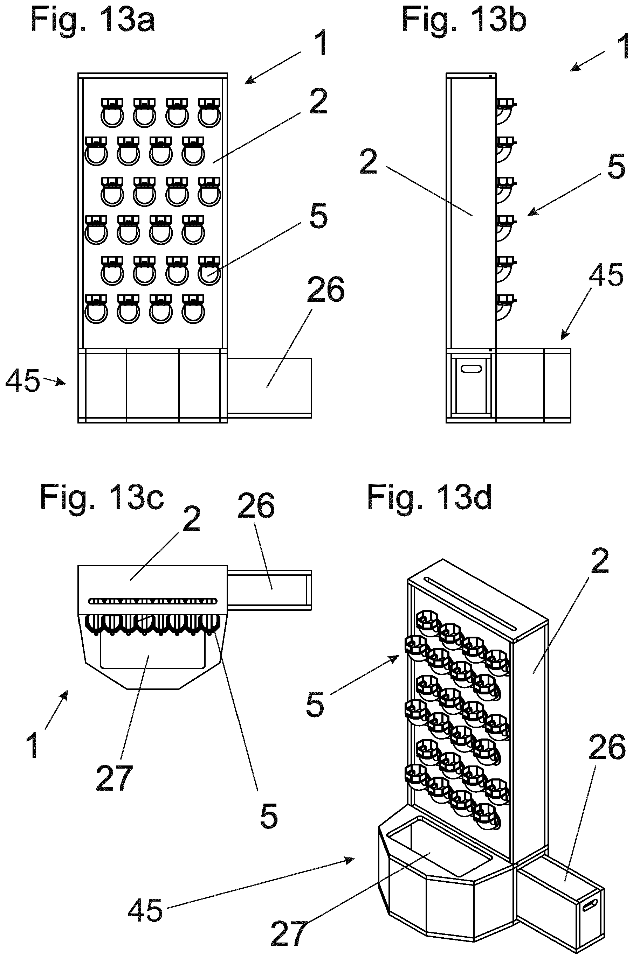

In den Figuren 3, sowie 4a bis 4c ist eine weitere Ausführungsform eines erfindungsgemäßen Pflanzbehälters 1 dargestellt (siehe auch Figuren 13a bis 14d für weitere Ausführungsformen). Diese Ausführungsform betrifft eine spezielle Gestaltung des Senkrohrs 18 (die übrigen Aspekte des Pflanzbehälters 1 unterscheiden sich nicht).

Das Senkrohr 18 weist eine schraubenförmige Formgebung auf, was am besten in Fig. 4a zu erkennen ist. Die Fig. 3 und 4b sind jeweils Schnittdarstellungen, wobei in Fig. 4b das Senkrohr 18 zusammen mit dem Behälter 20 gesondert dargestellt ist. Das Senkrohr 18 kann aus poröser Keramik oder porösem Kunststoff gefertigt sein. Dadurch wird das Senkrohr 18 bis zu einem gewissen Grad flüssigkeitsdurchlässig.

Die Vergrößerung der Oberfläche, welche durch die schraubenförmige Form des Senkrohrs 18 entsteht, trägt dazu bei, dass genügend Feuchtigkeit in das umgebende Pflanzsubstrat 3 übertreten kann.

In Fig. 4c ist eine Windung des schraubenförmigen Senkrohrs 18 als Detail C aus Fig. 4b dargestellt.

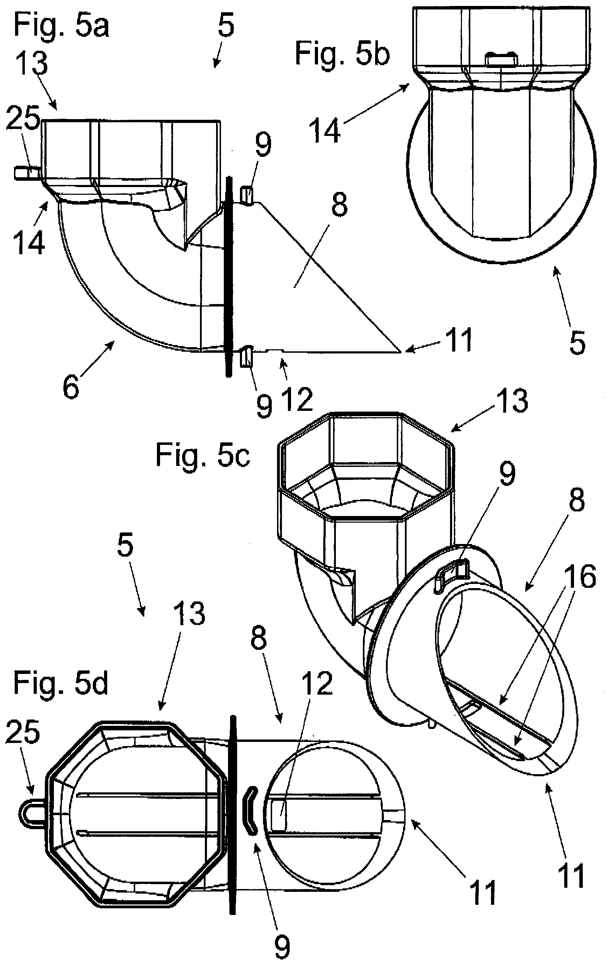

Fig. 5a bis 5d zeigen das erfindungsgemäße, im Wesentlichen L-förmige Rohrelement 5 in einer Seitenansicht, einer Vorderansicht, einer Draufsicht sowie einer perspektivischen Darstellung. Wieder sind die Biegung 6, die Verbreiterung 14 sowie der Rohrstumpf 8 als strukturelle Elemente zu erkennen. Weiterhin sind Erhebungen 9 eines Bajonettverschlusses zu erkennen. Diese wirken mit an den Öffnungen 4 angeordneten Ausnehmungen 10 zusammen, um den Bajonettverschluss zu bilden. Der Bajonettverschluss hat einen weiteren Vorteil. Durch den im Pflanzsubstrat eingebetteten Rohrstumpf 8 ergibt sich eine verbesserte Befestigung des Rohrelements 5. Durch den Bajonettverschluss, der mit einem axialen Einführen des Rohrstumpfes 8 kompatibel ist, wird dies gleichzeitig mit dessen formschlüssiger Verbindung genutzt - also mit doppeltem Effekt.

Ein Rohrdurchmesser der Rohrelemente 5 kann zwischen 3 cm und 15 cm, bevorzugt zwischen 4 cm und 10 cm und besonders bevorzugt zwischen 5 cm und 7 cm betragen.

Um die Abfuhr von überschüssiger Flüssigkeit zu ermöglichen, ist an der Unterseite des Rohrstumpfs 8 eine Abflussöffnung 12 angeordnet. An der Verbreiterung 14 ist des Weiteren eine Befestigungsmöglichkeit 25 vorgesehen, welche zur Führung bzw. Leitung der Wachstumsrichtung der Pflanzen mittels Schnüren, Drähten, Stangen und dergleichen dienen kann.

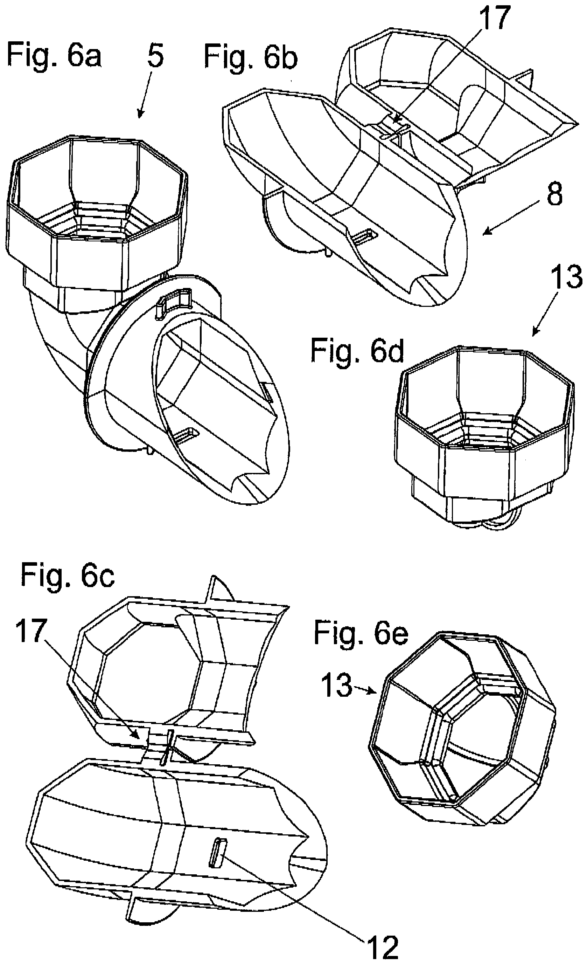

In den Fig. 6a bis 6e ist eine besonders einfache Art und Weise der Herstellung verdeutlicht. Während Fig. 6a das Rohrelement 5 wiedergibt, zeigen die Fig. 6b bis 6e Einzelteile, aus denen selbiger zusammengesetzt werden kann. Fig. 6b und Fig. 6c zeigen jeweils perspektivische Darstellungen eines ersten Teils und Fig. 6d und Fig. 6e zeigen zwei perspektivische Darstellungen eines zweiten Teils des Rohrelementes 5. Das in Fig. 6b und 6c dargestellte Teil verfügt über ein Filmscharnier 17. Durch Zusammenklappen und Aufsetzen des zweiten Teils entsteht das Rohrelement 5 auf einfache Weise, wobei gleichzeitig keine Teile gefertigt werden müssen, welche Hinterschneidungen oder dgl. aufweisen. Dies würde den Spritzguss der Teile unnötig verkomplizieren.

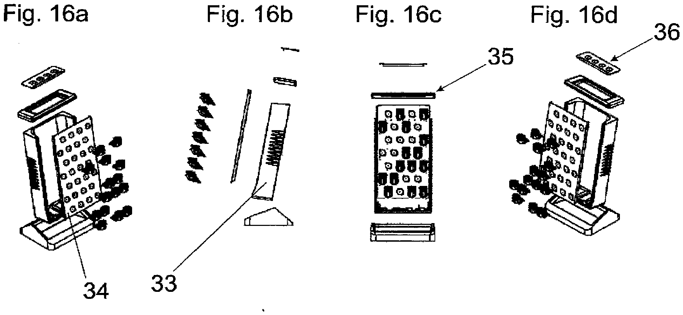

Die Verbreiterung 14 kann so ausgeführt sein, dass die Verbreiterung 14 in mehreren Drehstellungen relativ zum Rest des Rohrelementes 5 aufgesetzt werden kann. Die Befestigungsmöglichkeit 15 kann dadurch wie gewünscht ausgerichtet werden (siehe dazu auch Fig. 16b und die zugehörige Beschreibung).

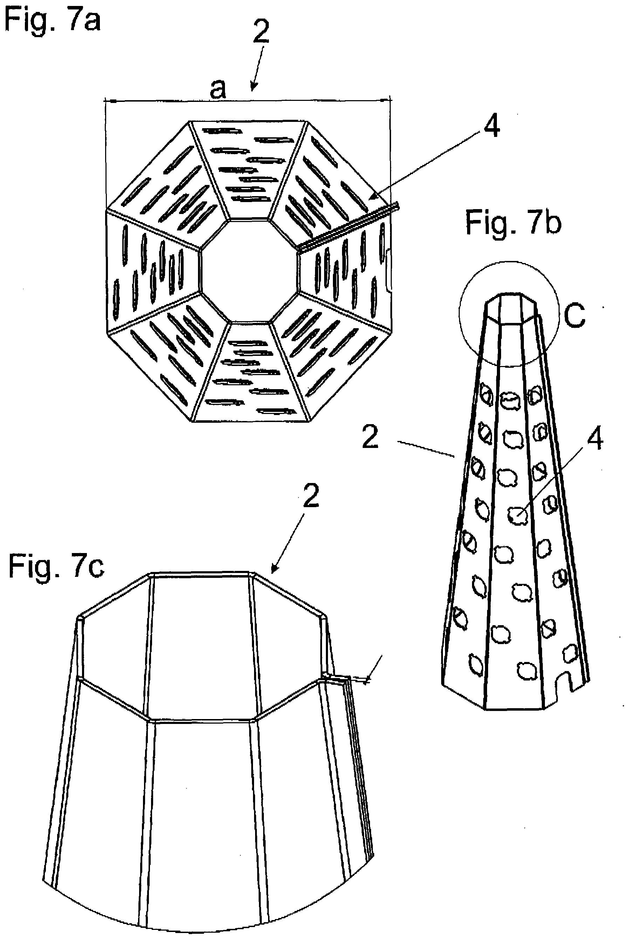

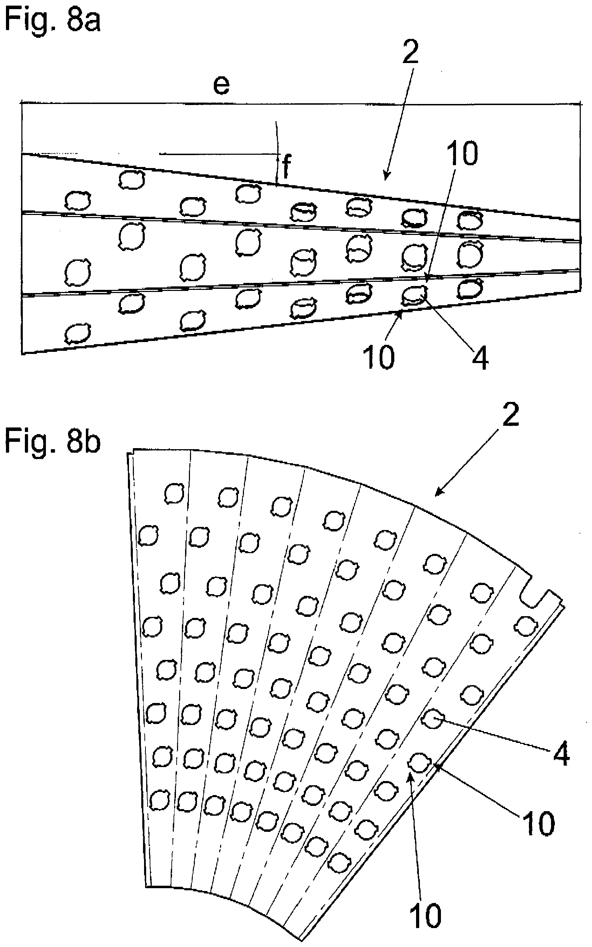

In den Fig. 7a bis 7c sowie 8a ist der Hohlkörper 2 isoliert dargestellt.

Der in diesem Fall pyramidenförmige Hohlkörper 2 wird durch Falten eines vorgefertigten, im Wesentlichen scheibensegmentförmigen Teils (siehe Fig. 8b) erstellt.

Fig. 7c zeigt das Detail C aus Fig. 7b, wobei der obere Teil der Pyramide zu erkennen ist. Durch das Zusammenfalten muss die Pyramide entlang einer Kante befestigt werden. Dies kann mittels einer Steckverbindung oder einer Verhakung geschehen. Es ist ebenfalls denkbar eine Klemmleiste über die parallel hervorstehenden Falze zu schieben. Des Weiteren ist es denkbar die Falze zu verschrauben oder zu vernieten, wobei auch hier eine Klemmleiste benutzt werden kann, um die Optik zu verbessern.

Die Höhe e des Hohlkörpers 2 kann zwischen 0,5 m und 2 m, bevorzugt zwischen 0,75 m und 1,5 m und besonders bevorzugt zwischen 1 m und 1,2 m betragen. In diesem speziellen Ausführungsbeispiel beträgt die Höhe e 1,1 m.

Die Breite a des Hohlkörpers 2 kann zwischen 0,2 m und 1 m, bevorzugt zwischen 0,3 m und 0,6 m und besonders bevorzugt zwischen 0,4 m und 0,5 m betragen. In diesem speziellen Ausführungsbeispiel beträgt die Breite a 0,406 m.

Der Winkel f, mit dem die Seiten des pyramidenförmigen Hohlkörpers 2 gegen die Vertikale geneigt sind kann zwischen 2° und 20°, bevorzugt zwischen 3,5° und 10° und besonders bevorzugt zwischen 6° und 7° betragen. In diesem speziellen Ausführungsbeispiel beträgt der Winkel f 6,3°.

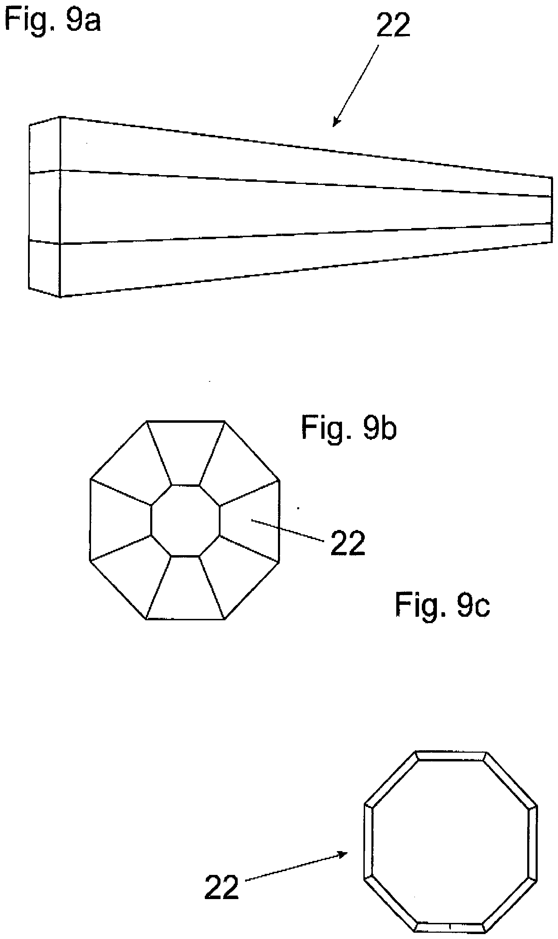

Die Fig. 9a bis 9c zeigen eine Seitenansicht, eine Draufsicht sowie eine Ansicht von unten des angepassten Sacks 22.

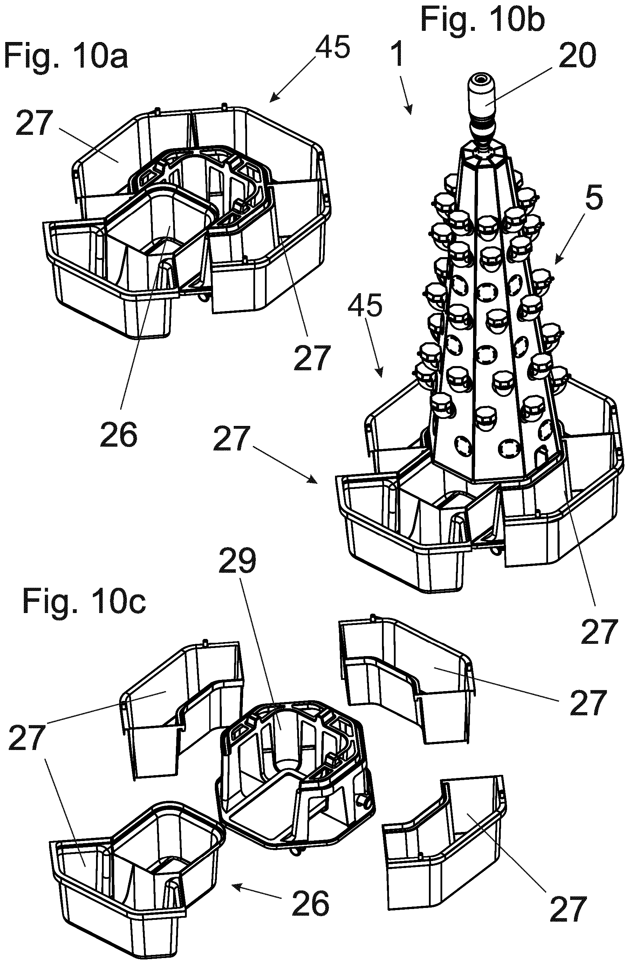

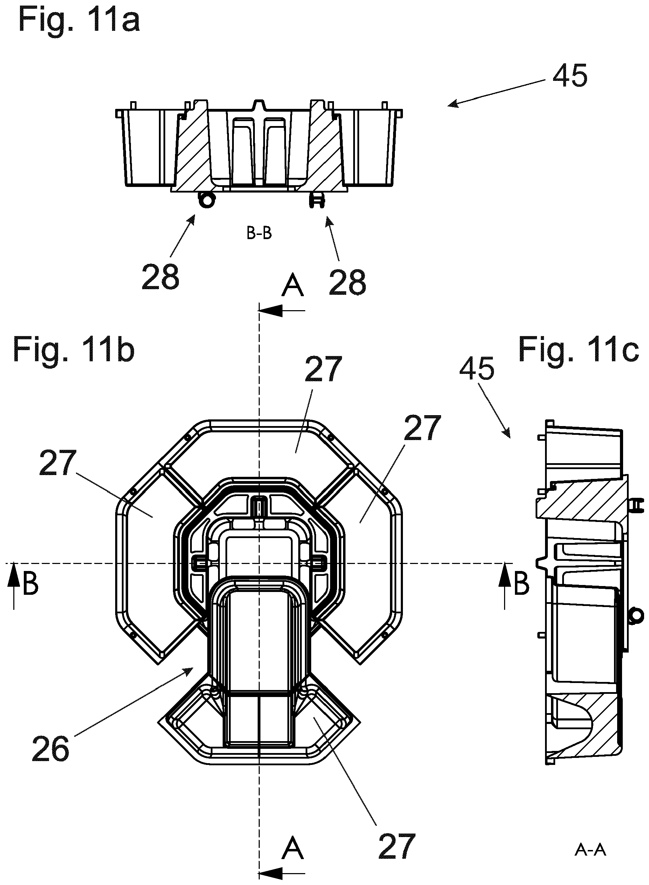

Eine Erweiterung der Ausführungsformen aus den Figuren 1a bis 1c, 2, 3 sowie 4a bis 4c ist in den Figuren 10a bis 10c sowie 11a bis 11c und 12a bis 12c dargestellt. Diese Erweiterung betrifft einen Unterbau 45, auf dem der erfindungsgemäße Pflanzbehälter 1 angeordnet werden kann. Wie in den Fig. 10a bis 10c sowie 11a bis 11c zu erkennen ist, ist der Unterbau 45 mehrteilig ausgebildet (insbesondere Fig. 10c). Der Unterbau 45 weist vier Flachbeetbehälter 27 auf. Dabei kann natürlich auch jede andere Anzahl an Flachbeetbehältern 27 Verwendung finden, die Fachleuten vorteilhaft erscheint.

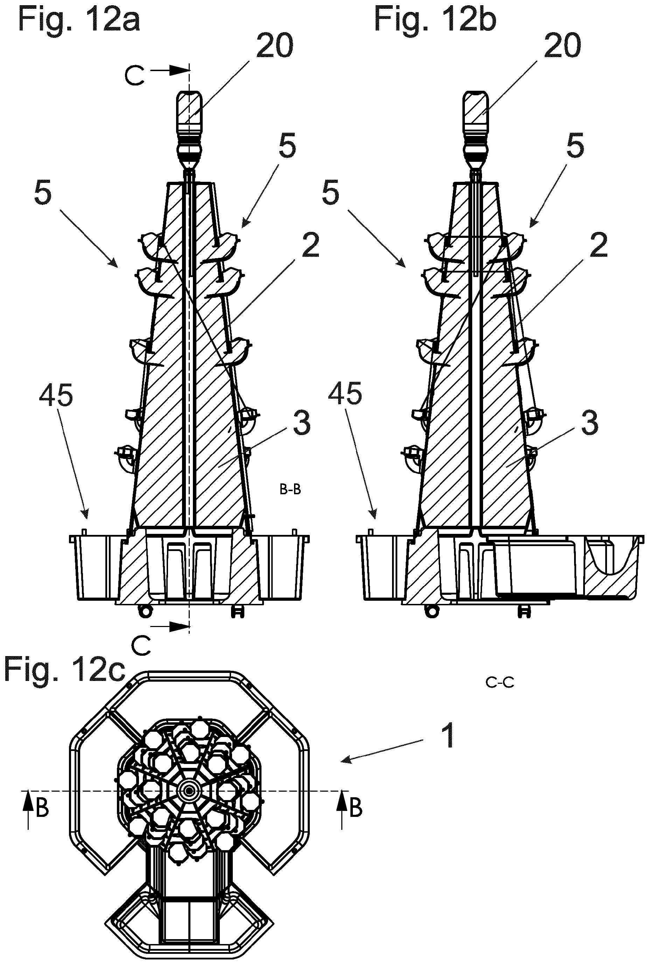

Ein weiteres Charakteristikum des Unterbaus 45 besteht in einer Schublade 26 (könnte auch als verschließbarer Hohlraum ausgeführt sein). Diese kann für Pflanzabfall oder zur Kompostierung verwendet werden. In einer besonders einfachen Ausführungsform ist die Schublade 26 integral mit einem der Flachbeetbehälter 27 ausgeführt. An einem zentralen Trägerteil 29 des Unterbaus 45 sind Räder 28 angeordnet, was in den Fig. 11a, 11c sowie 12a und 12b zu erkennen ist. Dadurch kann die gesamte Anordnung leicht verschoben werden, was besonders bei beengten Platzverhältnissen vorteilhaft ist.

Der Vollständigkeit halber sind in den Fig. 12a bis 12c zwei Schnittdarstellungen sowie eine Draufsicht der gesamten Anordnung mit geöffneter Schublade 26 dargestellt.

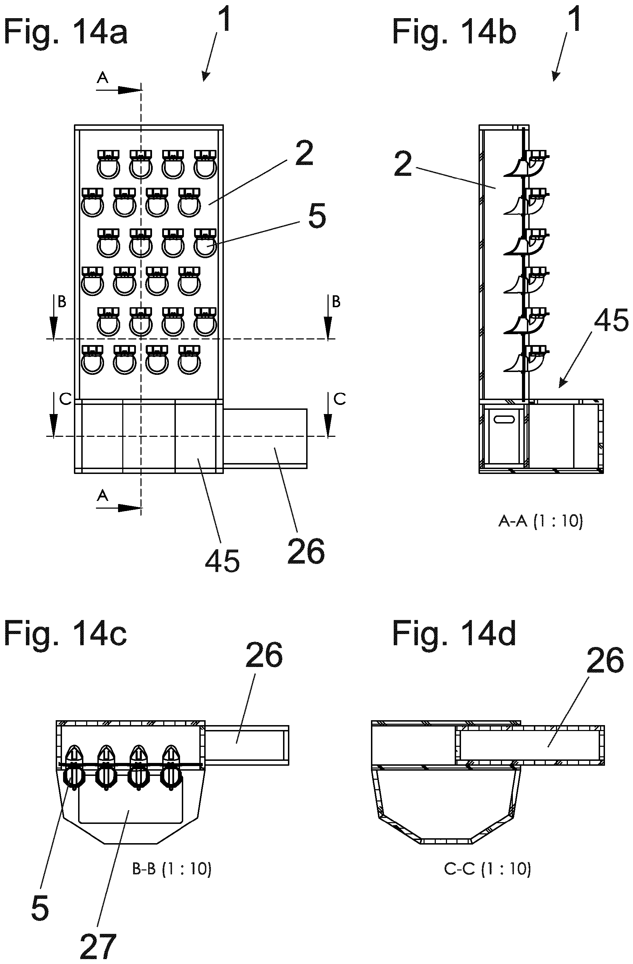

Die Fig. 13a bis 13d sowie 14a bis 14d betreffen eine weitere Ausführungsform der Erfindung. In diesem Fall ist der Hohlkörper 2 in Form eines aufgestellten Quaders ausgebildet, wobei an einer der Stirnflächen die Öffnungen 4 für die Rohrelemente 5 angeordnet sind. Diesen kann ebenfalls ein Flachbeetbehälter 27 vorgeschalten oder aufgesetzt sein. Außerdem kann auch bei dieser Ausführungsform eine Schublade 26 realisiert werden.

Die Flachbeetbehälter 27 können (in allen Ausführungsformen) zur Befüllung mit Pflanzsubstrat 3 und zur Bepflanzung dienen. Dies ist insbesondere bei Pflanzen, welche relativ tief wurzeln von Vorteil (Beispiel: Karotten). Wie aus dem letzten Ausführungsbeispiel hervorgeht, ist die Form des Hohlkörpers 2 an sich nicht wesentlich. Vorteilhaft ist lediglich eine nicht waagrechte Fläche, an der Öffnungen 4 für die Rohrelemente 5 angeordnet werden können. Die Neigung dieser Fläche kann gemäß Fachleuten bekannten Aspekten, wie Sonneneinstrahlung und Platzbedürfnissen, gewählt werden.

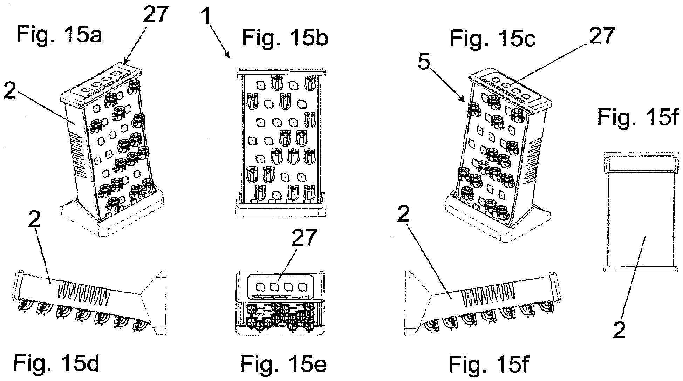

Die Figuren 15 bis 15f zeigen eine weitere Ausführungsform, welche der aus den Figuren 13a bis 13d und 14a bis 14d ähnlich ist. In diesem Ausführungsbeispiel ist der Hohlkörper 2 in Form eines Quaders aber nicht im 90°-Winkel aufgestellt, sondern geneigt angeordnet. Dies hat den Vorteil, dass die in den meisten Fällen schräg einfallenden Sonnenstrahlen effektiver genutzt werden, da eine größere Querschnittsfläche aus Sicht der einfallenden Sonnenstrahlen präsentiert wird (Analogie zum Weinberg).

In dieser Ausführung ist der Flachbeetbehälter 27 oben auf dem Hohlraum 2 angeordnet (also aufgesetzt). Dadurch kann weiterer Platz gespart werden.

Die Figuren 16a bis 16b zeigen verschiedene Explosionsdarstellungen der Ausführungsform aus den Figuren 15a bis 15f. Der Hohlkörper 2 ist durch einen Grundkörper 33 gebildet, welcher durch Eisnchieben einer Frontplatte 34 und Aufsetzten eines Deckels 35 - enthaltend den Flachbeetbehälter 27 - zum Hohlraum 2 wird.

Es ist zu bemerken, dass der Flachbeetbehälter 27 durch eine zusätzliche Abdeckung 36 abgedeckt werden kann. In den Figuren 15a bis 15f ist die abgedeckte Stellung gezeigt.

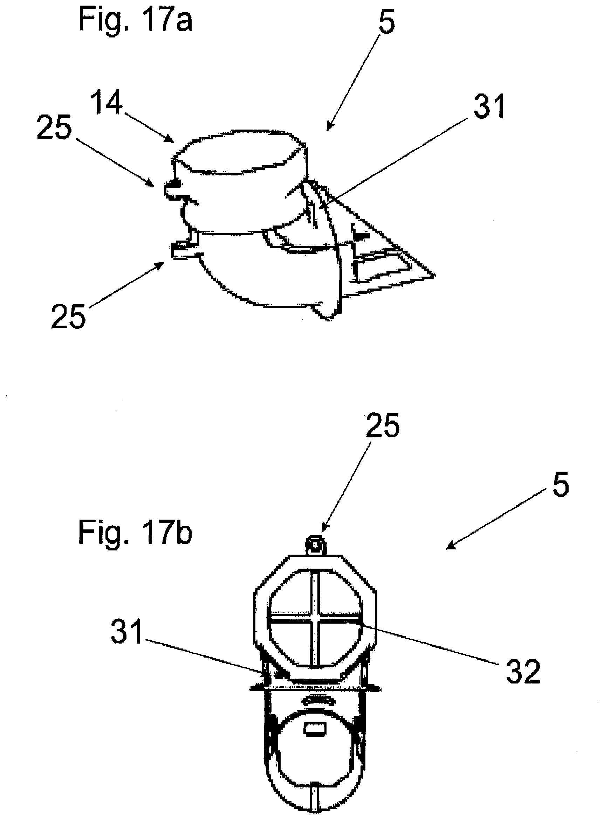

Fig. 17a und 17b stellen zusätzliche Aspekte bei einem erfindungsgemäßen Rohrelement 5 dar, welche frei mit den Ausführungsformen aus den Figuren 5a bis 5d sowie 6a bis 6c kombiniert werden können.

Es ist möglich zwei Befestigungsmöglichkeiten 25 vorzusehen, wobei eine an der Verbreiterung 14 und eine unterhalb davon angeordnet ist. Ist die Verbreiterung 14 dann so aufgesetzt, dass die beiden Befestigungsmöglichkeiten 25 in einer Ansicht von oben fluchten, kann eine besonders robuste Befestigung beispielsweise einer nach oben geführten Stange erreicht werden.

Zusätzlich kann die Verbreiterung 14 eine Halterung für ein zusätzliches Pflanzsubstrat aufweisen. Ein Beispiel wäre ein auf einem in der Verbreiterung 14 angeordneten Kreuz 32 abgelegte Kokostablette. Ein solches Kreuz 32 kann auch so ausgeführt sein, dass es herausgebrochen werden kann, falls die zusätzliche Halterung nicht gebraucht wird.

Ein weiterer Vorteil der Mehrteiligkeit des Rohrelementes 5 besteht darin, dass einfach ein Substrat-Schichtaufbau ermöglicht wird (d.h. zum Beispiel Wachstumssubstrat (Gartenerde) im Hohlkörper 2, pflanzenspezifische Anzuchterde im Rohrelement 5 und eine Kokostablette mit Samenkorn in der Verbreiterung 14).

Es kann außerdem vorgesehen sein, dass das Rohrelement 5 eine zusätzliche Wurzelbewässerung unterstützt. Beispielsweise mittels eines kleinen Röhrchens 31, welches beispielsweise knapp unterhalb der Verbreiterung 14 angeordnet ist. Statt eines Röhrchens 31 kann auch eine kleine Öffnung eingesetzt werden. Mittels eines Schlauches kann die Wurzelbewässerung mit einem Flüssigkeitsreservoir oder dergleichen verbunden sein. Die Zufuhr von Flüssigkeit kann auch gesteuert oder geregelt werden - beispielsweise unter Verwendung eines Erdfeuchtesensors.

Die Wurzelbewässerungen mehrerer Rohrelemente 5 können verbunden sein, sodass eine gemeinsame Wurzelbewässerung für mehrere Rohrelemente 5 entsteht. Die Wurzelbewässerungen der einzelnen Rohrelemente 5 können dabei parallel und/oder seriell verschaltet sein.

## Patentansprüche

1. Pflanzbehälter (1) mit einem Hohlkörper (2) zur Aufnahme eines Pflanzsubstrats (3), insbesondere Erde, welcher Öffnungen (4) aufweist, und an den Öffnungen (4) angeordneten Rohrelementen (5), welche eine Biegung (6) und/oder einen Knick aufweisen, **dadurch gekennzeichnet, dass**
- die Rohrelemente (5) am Hohlkörper (2) mittels eines Bajonettverschlusses (9, 10) lösbar befestigbar sind und
- die Rohrelemente (5) mehrteilig aus Kunststoff durch Spritzguss hergestellt sind.

2. Pflanzbehälter nach Anspruch 1, **dadurch gekennzeichnet, dass** vom Hohlkörper (2) weg weisende Enden (7) der Rohrelemente (5) im Wesentlichen nach oben weisen.

3. Pflanzbehälter nach Anspruch 1 oder 2, **dadurch gekennzeichnet, dass** die Rohrelemente (5) jeweils ein in den Hohlkörper (2) hinein ragenden - vorzugsweise schräg abgeschnittenen - Rohrstumpf (8) aufweisen.

4. Pflanzbehälter nach Anspruch 3, **dadurch gekennzeichnet, dass** am Rohrstumpf (8) eine Schneide (11) zum Durchstechen eines das Pflanzsubstrat (3) enthaltenden Sacks (22) vorgesehen ist.

5. Pflanzbehälter nach Anspruch 3 oder 4, **dadurch gekennzeichnet, dass** an einer Unterseite des Rohrstumpfes (8) eine Abflussöffnung (12) zur Abfuhr überschüssiger Flüssigkeit angeordnet ist.

6. Pflanzbehälter nach einem der Ansprüche 1 bis 5, **dadurch gekennzeichnet, dass** das vom Hohlkörper (2) weg weisende Ende (7) der Rohrelemente (5) eine Verbreiterung (14) aufweist.

7. Pflanzbehälter nach einem der Ansprüche 1 bis 6, **dadurch gekennzeichnet, dass** in den Rohrelementen (5) jeweils ein Vlies (15) zum Transport von Feuchtigkeit zum vom Hohlkörper (2) weg weisenden Ende (7) der Rohrelemente (5) vorgesehen ist.

8. Pflanzbehälter nach einem der Ansprüche 1 bis 7, **dadurch gekennzeichnet, dass** an einer unteren Innenwandung der Rohrelemente (5) Lamellen (16) angeordnet sind.

9. Pflanzbehälter nach einem der Ansprüche 1 bis 8, **dadurch gekennzeichnet, dass** der Hohlkörper (2) aus Kunststoff gefertigt sind.

10. Pflanzbehälter nach einem der Ansprüche 1 bis 9, **dadurch gekennzeichnet, dass** die Rohrelemente (5) ein Filmscharnier (17) und/oder eine schwalbenschwanzartige Verbindung aufweisen.

11. Pflanzbehälter nach einem der Ansprüche 1 bis 10, **dadurch gekennzeichnet, dass** der Hohlkörper (2) auf einem Unterbau (45) angeordnet ist, der vorzugsweise eine Schublade (26) und/oder einen verschließbaren Hohlraum für Abfall und/oder Kompost umfasst.

12. Pflanzbehälter nach einem der Ansprüche 1 bis 11 mit einem in den Hohlkörper (2) ragenden Senkrohr (18), **dadurch gekennzeichnet,**
- **dass** an einem oberen Ende des Senkrohrs (18) ein Verbindungsstück (19) angeordnet ist, mittels dessen ein Behälter (20) für Flüssigkeit, insbesondere Wasser, an das Senkrohr anschließbar ist,
- **dass** das Senkrohr (18) an einem unteren Ende verschlossen ist und
- **dass** das Senkrohr (18) eine Vielzahl von Öffnungen aufweist, deren Durchmesser jeweils weniger als 1,5 mm, bevorzugt weniger als 1 mm und besonders bevorzugt weniger als 0,75 mm, beträgt, und/oder dass das Senkrohr aus einem porösen Material gefertigt ist.

13. Pflanzbehälter nach Anspruch 12, wobei das Senkrohr aus einem porösen Material gefertigt ist, **dadurch gekennzeichnet, dass** das poröse Material Porendurchmesser zwischen 0,5 µm und 10 µm, bevorzugt zwischen 1 µm und 5 µm und besonders bevorzugt zwischen 1 µm und 3 µm, aufweist.

14. Verwendung eines Rohrelementes, welches eine Biegung (6) und/oder einen Knick aufweist, zur Aufnahme eines Pflanzsubstrats (3), in einem Pflanzbehälter nach einem der Ansprüche 1 bis 13, wobei
- die Rohrelemente (5) am Hohlkörper (2) mittels eines Bajonettverschlusses (9, 10) lösbar befestigbar sind und
- die Rohrelemente (5) mehrteilig aus Kunststoff durch Spritzguss hergestellt sind.

## Claims

1. A plant container (1) comprising a hollow body (2) for receiving a plant substrate (3), in particular soil, which has openings (4), and tube elements (5) which are arranged at the openings (4) and have a bend (6) and/or a kink,
**characterised in that**
- the tube elements (5) can be releasably fixed to the hollow body (2) by means of a bayonet connection (9, 10), and
- the tube elements (5) are produced in a plurality of parts by injection moulding.

2. A plant container according to claim 1 **characterised in that** ends (7) of the tube elements (5), that point away from the hollow body (2), point substantially upwards.

3. A plant container according to claim 1 or 2 **characterised in that** the tube elements (5) each have a tube stub (8) which projects into the hollow body (2) and is preferably cut off at an angle.

4. A plant container according to claim 3 **characterised in that** a cutting edge (11) is provided on the tube stub (8) for piercing a bag (22) containing the plant substrate (3).

5. A plant container according to claim 3 or claim 4 **characterised in that** a drain opening (12) for removing excess liquid is arranged at an underside of the tube stub (8).

6. A plant container according to one of claims 1 to 5 **characterised in that** the end (7) of the tube elements (5), that points away from the hollow body (2), has an enlargement (14).

7. A plant container according to one of claims 1 to 6 **characterised in that** provided in the tube elements (5) is a non-woven material (15) for transporting moisture to the end (7) of the tube elements (5), that points away from the hollow body (2).

8. A plant container according to one of claims 1 to 7 **characterised in that** slats (16) are arranged on a lower inner wall of the tube elements (5).

9. A plant container according to one of claims 1 to 8 **characterised in that** the hollow body (2) is made of plastic.

10. A plant container according to one of claims 1 to 9 **characterised in that** the tube elements (5) have a film hinge (17) and/or a dovetail-like connection.

11. A plant container according to one of claims 1 to 10 **characterised in that** the hollow body (2) is arranged on a substructure (25) which preferably comprises a drawer (26) and/or a closable hollow space for waste and/or compost.

12. A plant container according to one of claims 1 to 11 comprising a sink tube (18) projecting into the hollow body (2), **characterised in that**
- arranged at an upper end of the sink tube (18) is a connecting portion (19), by means of which a container (20) for liquid, in particular water, can be connected to the sink tube,
- the sink tube (18) is closed at a lower end and
- the sink tube (18) has a plurality of openings, the diameter of each of which is less than 1.5 mm, preferably less than 1 mm and particularly preferably less than 0.75 mm, and or that the sink tube is made of a porous material.

13. A plant container according to claim 12 wherein the sink tube is made of a porous material, **characterised in that** the porous material has pore diameters between 0.5 µm and 10 µm, preferably between 1 µm and 5 µm and particularly preferably between 1 µm and 3 µm.

14. Use of a tube element which has a bend (6) and/or a kink for receiving a plant substrate (3) in a plant container according to one of claims 1 to 13, wherein
- the tube elements (5) can be releasably fixed to the hollow body (2) by means of a bayonet connection (9, 10), and
- the tube elements (5) are produced in a plurality of parts by injection moulding.

## Revendications

1. Jardinière (1) avec un corps creux (2) pour recevoir un substrat végétal (3), en particulier de la terre, laquelle présente des ouvertures (4) et des éléments tubulaires (5) disposés au niveau des ouvertures (4), lesquels présentent un cintrage (6) et/ou un pli, **caractérisée en ce que**
- les éléments tubulaires (5) peuvent être fixés de manière amovible au niveau du corps creux (2) au moyen d'une fermeture à baïonnette (9, 10) et
- les éléments tubulaires (5) sont fabriqués en plusieurs parties à partir de matière plastique par moulage par injection.

2. Jardinière selon la revendication 1, **caractérisée en ce que** des extrémités (7), pointant de manière à s'éloigner du corps creux (2), des éléments tubulaires (5) pointent sensiblement vers le haut.

3. Jardinière selon la revendication 1 ou 2, **caractérisée en ce que** les éléments tubulaires (5) présentent respectivement un moignon de tube (8) dépassant à l'intérieur du corps creux (2) - de préférence tronqué de manière oblique.

4. Jardinière selon la revendication 3, **caractérisée en ce qu'**une lame (11) pour transpercer un sac (22) contenant le substrat végétal (3) est prévue au niveau du moignon de tube (8).

5. Jardinière selon la revendication 3 ou 4, **caractérisée en ce qu'**une ouverture d'évacuation (12) pour évacuer un excédent de liquide est disposée au niveau d'un côté inférieur du moignon de tube (8).

6. Jardinière selon l'une quelconque des revendications 1 à 5, **caractérisée en ce que** l'extrémité (7), pointant de manière à s'éloigner du corps creux (2), des éléments tubulaires (5) présente une extension (14).

7. Jardinière selon l'une quelconque des revendications 1 à 6, **caractérisée en ce que** respectivement un non-tissé (15) pour le transport d'humidité vers l'extrémité (7), pointant de manière à s'éloigner du corps creux (2), des éléments tubulaires (5) est prévu dans les éléments tubulaires (5).

8. Jardinière selon l'une quelconque des revendications 1 à 7, **caractérisée en ce que** des lamelles (16) sont disposées au niveau d'une paroi intérieure inférieure des éléments tubulaires (5).

9. Jardinière selon l'une quelconque des revendications 1 à 8, **caractérisée en ce que** le corps creux (2) est produit à partir de matière plastique.

10. Jardinière selon l'une quelconque des revendications 1 à 9, **caractérisée en ce que** les éléments tubulaires (5) présentent une charnière en film (17) et/ou une liaison de type queue-d'aronde.

11. Jardinière selon l'une quelconque des revendications 1 à 10, **caractérisée en ce que** le corps creux (2) est disposé sur une base (45), qui comprend de préférence un tiroir (26) et/ou un espace creux pouvant être fermé pour des déchets et/ou du compost.

12. Jardinière selon l'une quelconque des revendications 1 à 11 avec un tube descendant (18) dépassant dans le corps creux (2), **caractérisée en ce**
- **qu'**est disposée au niveau d'une extrémité supérieure du tube descendant (18) une pièce de liaison (19), au moyen de laquelle un contenant (20) pour du liquide, en particulier de l'eau, peut être raccordé au tube descendant,
- **que** le tube descendant (18) est fermé au niveau d'une extrémité inférieure, et
- **que** le tube descendant (18) présente une pluralité d'ouvertures, dont le diamètre est respectivement inférieur à 1,5 mm, de manière préférée inférieur à 1 mm, et de manière particulièrement préférée inférieur à 0,75 mm, et/ou que le tube descendant est produit à partir d'un matériau poreux.

13. Jardinière selon la revendication 12, dans laquelle le tube descendant est produit à partir d'un matériau poreux, **caractérisée en ce que** le matériau poreux présente un diamètre de pore compris entre 0,5 µm et 10 µm, de manière préférée entre 1 µm et 5 µm et de manière particulièrement préférée entre 1 µm et 3 µm.

14. Utilisation d'un élément tubulaire, lequel présente un cintrage (6) et/ou un pli, pour recevoir un substrat végétal (3), dans une jardinière selon l'une quelconque des revendications 1 à 13, dans laquelle
- les éléments tubulaires (5) peuvent être fixés de manière amovible au niveau du corps creux (2) au moyen d'une fermeture à baïonnette (9, 10), et
- les éléments tubulaires (5) sont fabriqués en plusieurs parties à partir de matière plastique par moulage par injection.
